# EUROPÄISCHE PATENTANMELDUNG

(11) **EP 3 907 157 A1**
(43) Veröffentlichungstag der Anmeldung: **10.11.2021**
(21) Anmeldenummer: 20173767.3
(22) Anmeldetag: 08.05.2020
(51) Int. Cl.: B65D 85/804

(54) **VERBUNDWERKSTOFF MIT EINER AUS SILBERHÄUTCHEN DER KAFFEEKIRSCHE GEWONNENEN KOMPONENTE UND DIESEN VERBUNDVERKSTOFF UMFASSENDE PORTIONENKAPSEL**

(71) Anmelder: Tchibo GmbH, 22297 Hamburg (DE)
(72) Erfinder: Die Erfindernennung liegt noch nicht vor
(74) Vertreter: Frei Patent Attorneys

(57) **Zusammenfassung**

Die Erfindung ist auf dem Gebiet der Zubereitung eines Getränks, insbesondere Kaffee, unter Verwendung einer Portionenkapsel angesiedelt und betrifft eine Portionenkapsel 1 mit einem Basiselement 11 zur Aufnahme eines Extraktionsguts, ein Verfahren zur Herstellung der Portionenkapsel, ein Verbundwerkstoff, der im Umfeld der Produktion von Kaffee-Portionenkapsel besonders effizient hergestellt werden kann, und ein Verfahren zur Herstellung des Verbundwerkstoffs. Der Verbundwerkstoff weist eine Komponente auf, die aus den Silberhäutchen der Kaffeekirsche hergestellt ist. Eine erfindungsgemässe Portionenkapsel 1 umfasst diesen Verbundwerkstoff.

## Beschreibung

Die Erfindung ist auf dem Gebiet der Vorrichtungen und Verfahren zum Zubereiten von Getränken mittels in eine Getränkekapsel eingeführter Flüssigkeit angesiedelt, wobei die Getränkekapsel eine lösliche Nahrungsmittelsubstanz enthält, aus welcher durch Einspritzen von Wasser ein Getränk oder Getränkebestandteil zubereitet werden kann. Die Erfindung ist insbesondere auf dem Gebiet der Zubereitung von Kaffee unter Verwendung einer Kaffeekapsel angesiedelt. Die Erfindung betrifft insbesondere eine Portionenkapsel, ein Verfahren zur Herstellung der Portionenkapsel, ein Verbundwerkstoff, der im Umfeld der Produktion von Kaffeekapsel besonders effizient hergestellt werden kann, und ein Verfahren zur Herstellung des Verbundwerkstoffs.

Unter den Systemen zum Zubereiten von Getränken sind die sogenannten Kaffeekapselsysteme (es gibt sie auch in Varianten zur Zubereitung von Tee) bekannt, bei denen im Allgemeinen heisses Wasser meist unter Druck in eine Kapsel eingeführt wird, um durch Extraktion ein Kaffee- oder Teegetränk zuzubereiten. Für das Einführen des heissen Wassers wird die Kapsel oft auf der einen Seite (Injektionsseite) angestochen. Für das Ausleiten des gebrühten Getränks, im Allgemeinen auf der anderen Seite der Kapsel (der Extraktionsseite) sind verschiedene Möglichkeiten bekannt. Einerseits gibt es Systeme, bei denen auch extraktionsseitig ein Anstechen durch entsprechende Perforationsdorne vorgesehen ist. Anderseits sind Systeme bekannt, bei denen eine extraktionsseitige Begrenzung der Kapsel unter dem Innendruck während des Brühprozesses angestochen oder angerissen wird, wofür ein kapselexternes (in der Brühkammer der entsprechenden Kaffeemaschine vorhandenes) oder ein kapselinternes Mittel vorhanden sein kann. Schliesslich gibt es auch Kapseln, die bereits geöffnet sind, bei denen also keine Kapselwandung/Membran angestochen oder angerissen werden muss um das Getränk auszuleiten.

Am weitesten verbreitet sind Kapseln aus Materialien, die weder biologisch abbaubar sind noch aus erneuerbaren Rohstoffen bestehen. Die Kapseln bestehen zu einem hohen Anteil beispielsweise aus Aluminium oder aus Polypropylen (PP). Solche Kapseln können sowohl für die Lagerung (z.B. Dichtigkeit, insbesondere Luft-/Sauerstoff-Undurchlässigkeit) als auch für die Anwendung (z.B. Wärmeformbeständigkeit, Anstechverhalten etc.) vorteilhafte Eigenschaften haben. Ein grosser Nachteil dieser Kapseln ist der nach der Verwendung anfallende Abfall beziehungsweise der nötige hohe Aufwand zur Wiederverwertung der in den Kapseln verwendeten Materialien. Letzterer umfasst das Einsammeln der in der Regel im privaten Bereich verwendenden Kapseln, der Transport derselben zu Recycling-Anlagen und den Wiederaufbereitungsprozess selbst. In anderen Worten, selbst für die Wiederverwertung müssen beachtliche Ressourcen (Zeit, Energie, aber auch Transportkosten) aufgewendet werden, die wiederum die Umwelt belasten können (z.B. CO₂-Emissionen bei Transport und zur Gewinnung der bei der Wiederaufbereitung nötigen Energie). Ferner geht auch bei der Wiederaufbereitung das in der Kapsel enthaltene Extraktionsgut in der Regel verloren.

Die Verwendung von weniger ressourcenintensiven Materialien für Portionenkapseln ist an sich bekannt. Insbesondere ist der Einsatz von Bio-Kunststoffen diskutiert worden. Als solche werden einerseits Kunststoffe bezeichnet, die aus einem nachwachsenden Rohstoff gefertigt sind (sogenannte biobasierte Kunststoffe). Anderseits sind Bio-Kunststoffe Kunststoffe, die biologisch abbaubar sind (sogenannt bioabbaubare Kunststoffe). Die für die Herstellung von Portionenkapseln vorgeschlagenen Kunststoffe sind bioabbaubar und beinhalten teilweise einen Anteil von biobasierten Kunststoffen.

Beispielsweise zeigt WO 2011/015973 A1 eine Kapsel, die vollständig aus biologisch abbaubarem Material besteht, wobei die Realisierung der die Kapsel verschliessenden Membran im Vordergrund der Lehre von WO 2011/015973 A1 steht und auf das verwendete Material nicht eingegangen wird.

WO 2015/170358 A2 zeigt eine biologisch abbaubare Kapsel aus einem Holzwerkstoff, die über Verstärkungselemente verfügt, um dem während des Brühprozess in der Kapsel vorherrschenden Drucks widerstehen zu können.

DE 202016104950 U1 zeigt eine hermetisch verschliessbare Portionspackung oder einen hermetisch verschliessbaren Portionsbeutel mit einer biologisch abbaubaren Kapsel oder einem biologisch abbaubaren Pad, wobei die Portionspackung oder der Portionsbeutel vollständig aus biologisch abbaubarem Material besteht. Biokunststoff, wie Polyactid (PLA) oder Mater-Bi® werden als Beispiele des verwendeten Materials genannt.

WO 2017/186743 A1 offenbart die Verwendung eines Bio-Werkstoffs unter anderem für Kaffee- und Teekapseln, wobei der Bio-Werkstoff einen biologisch abbaubaren Kunststoff und Sonnenblumenkernschalen bzw. Sonnenblumenkernhülsen umfasst.

Obwohl Portionenkapseln aus biologisch abbaubarem Material und/oder erneuerbarem Material gemäss dem Stand der Technik ein Schritt in die richtige Richtung mit Blick auf den schonenden Umgang mit Ressourcen sind, gibt es diesbezüglich noch Optimierungspotenzial.

Es ist eine Aufgabe der vorliegenden Erfindung, den Ressourcenverbrauch und die Umweltverträglichkeit von Portionenkapseln weiter zu verbessern. Insbesondere ist es eine Aufgabe der Erfindung, die Herstellung der gebrauchsfertigen, das heisst mit einem Extraktionsgut gefüllten, Portionenkapsel und die Entsorgung der gebrauchten Portionenkapsel mit Blick auf den Ressourceneinsatz zu verbessern.

Insbesondere ist es eine Aufgabe der Erfindung, einen mit Blick auf den Ressourcenverbrauch optimierten Verbundwerkstoff für Portionenkapseln, insbesondere für Kaffeekapseln, und ein Verfahren zur Herstellung dieses Verbundwerkstoffs zur Verfügung zu Stellen. Beim Verbundwerkstoff kann es sich insbesondere um eine Biokunststoff, insbesondere einen biologisch abbaubaren Biokunststoff mit hohem Anteil an erneuerbaren Rohstoffen, handeln. Insbesondere kann der Verbundwerkstoff biologisch abbaubar gemäss EN 13432 (Stand Ende 2019) oder ASTM 6400 (Stand Ende 2019) sein. Der Verbundwerkstoff kann vollständig biologisch abbaubar sein.

Eine zentrale Aufgabe der Erfindung besteht darin, eine mit Blick auf den Ressourcenverbrauch optimierte Portionenkapsel und ein Verfahren zur Herstellung einer solchen Portionenkapsel zur Verfügung zu stellen.

Ein Bestandteil der Kaffeefrüchte und Kaffeesamen, insbesondere der wirtschaftlich relevanten Spezies Coffea arabica, C. canephora, C. liberica (im Weiteren: der Kaffeefrüchte und -samen) ist das sogenannte Silberhäutchen. Das Silberhäutchen ist die Testa, ein Überbleibsel des Perisperms, das im Verlauf der Samenentwicklung vom Endosperm weitgehend verdrängt wird. Das Silberhäutchen umschliesst die Kaffeebohnen vollständig und findet sich somit auch im charakteristischen Einschnitt derselben. Die Kaffeebohne als ganze wird selbst wiederum von der Pergamenthaut (dem Endokarp), der Pektinschicht und der Pulpe (zusammen: das Mesokarp), sowie der Fruchthaut (dem Exokarp) umschlossen. Details zum Aufbau von Kaffeefrüchten und Kaffeesamen finden sich beispielsweise in Mendes AJT (1942) Observações Citolögicas em Coffea: VI -Desenvolvimento do embriäo e do endosperma em Coffea Arabica 1, Bragantia 2 (4):115-128 oder in Gassner G, Hohmann B, Deutschmann F (1989) Mikroskopische Untersuchung pflanzlicher Lebensmittel. 5th edn. Gustav Fischer Verlag, Stuttgart (insbesondere Abbildungen 457-461).

In der Regel wird das Silberhäutchen weitgehende bei der Röstung entfernt. In der Anfangsphase der Röstung erfährt die Bohne eine Volumenzunahme, die von der Silberhaut nicht mitgemacht wird. Als Folge davon wird die Silberhaut abgesprengt und in der Röstapparatur vom Röstgut separiert und entfernt, beispielsweise über eine entsprechend ausgelegte Luftströmung.

In anderen Worten: das Silberhäutchen fällt als Abfallprodukt bei der Kaffeeröstung an.

Der Erfindung liegt die Erkenntnis zu Grunde, dass sich das Silberhäutchen der Kaffeebohne, insbesondere das Silberhäutchen wie es beim Röstprozess separiert wird, sich sehr gut als Komponente eines Verbundwerkstoffs eignet.

Ein Verbundwerkstoff umfasst mindestens zwei Komponenten, wobei eine erste Komponente in der Regel ein Kunststoff (Kunststoffkomponente, Kunststoffmatrix) ist und eine zweite, von der Kunststoffkomponente unterschiedliche, Komponente auch als Füllstoff bezeichnet wird. Der Erfindung liegt die Erkenntnis zu Grunde, dass sich Silberhäutchen der Kaffeebohnen ohne grossen Aufwand zu einem sehr guten Füllstoff für einen Verbundwerkstoff mit einer Kunststoffkomponente verarbeiten lassen, insbesondere für einen Verbundwerkstoff, der sich sehr gut zur Herstellung von Portionenkapseln eignet. Das heisst, der resultierende Verbundwerkstoff hat Eigenschaften, die ein einfaches Umformen zu einem oder mehreren Bestandteilen der Portionenkapsel ermöglichen, die lebensmittelverträglich sind, die das in der Portionenkapsel enthaltene Extraktionsgut so schützen, dass eine Lagerung, beispielsweise über Monate oder ein paar wenige (z.B. 1, 2 oder 3) Jahre, möglich ist, und die einen problemlosen Einsatz in Getränkezubereitungssystem erlauben. Letzteres bedingt unter anderem, dass der Verbundwerkstoff bei den während der Getränkezubereitung vorherrschenden Temperaturen und Drücken nicht zu sehr verformt (Temperaturbeständigkeit, Elastizität) oder gar reist (Zugfestigkeit, Bruchdehnung), dass er anstechbar ist und dass die Anstechspitzen/Injektoren nach der Getränkezubereitung problemlos vom Verbundwerkstoff getrennt werden können.

Mit Blick auf die Haltbarkeit einer den besagtem Verbundwerkstoff umfassenden Portionenkapsel deuten erste Untersuchungen darauf, dass diese im Vergleich zu anderen biobasierten Portionenkapseln erhöht ist. Mit anderen Worten gibt es Hinweise darauf, dass eine Portionenkapsel, die den Verbundwerkstoff umfasst oder aus diesem besteht, das in der Portionenkapsel enthaltene Extraktionsgut so schützt, dass eine längere Lagerung im Vergleich zu anderen biobasierten Portionenkapsel möglich ist (erhöhte Lagerbeständigkeit). Je stärker die Portionenkapsel verhindert, dass sich das enthaltene Extraktionsgut verändert, insbesondere mit Blick auf den Geschmack des erzeugten Getränkes, desto länger ist die zulässige Lagerzeit. Es wird vermutet, dass der aus Silberhäutchen gewonnene Füllstoff eine antioxidative Wirkung hat, die sich positiv auf die Beständigkeit des in der Portionenkapsel befindlichen Extraktionsguts auswirkt.

Der Verbundwerkstoffs kann, wie an sich bekannt, weitere Zuschlagstoffe (Additive) enthalten, um die Eigenschaften des Verbundwerkstoffs einzustellen.

In anderen Worten: Beim erfindungsgemässen Verbundwerkstoff handelt es sich vorzugsweise um einen durch Zuschlagstoffe aufgearbeiteten Kunststoff, wobei ein Zuschlagstoff aus Silberhäutchen der Kaffeebohne gewonnen wird. Die Kunststoffkomponente kann aus einem oder mehreren Kunstoffen bestehen.

Die Verwendung des Silberhäutchens als Komponente (Füllstoff) für einen Verbundwerkstoff für Portionenkapseln hat diverse Vorteile, beispielsweise:
- Ein Abfallprodukt der Kaffeeherstellung, insbesondere der Kaffeeherstellung für Portionenkapseln, wird für die Portionenkapsel selbst verwendet. Damit kann eine unter Umständen aufwendig gewonnene Komponente (Füllstoff) durch eine Komponente ersetzt werden, die aus einem Abfallprodukt (das heisst aus Silberhäutchen) gewonnen wird. Dies reduziert den Ressourcenverbrauch für die Herstellung der Portionenkapsel. Ferner führt dies dazu, dass die ersetzte Komponente nicht zugekauft werden muss, was die Herstellungskosten reduziert.
   Letztlich können bei einer Rösterei, die nahe bei der Produktionsstätte der Portionenkapsel liegt, Transportkosten und Transportvolumen und damit auch mit dem Transport verbundene Umwelteinflüsse reduziert werden.
- Der biobasierte, das heisst erneuerbare, Anteil der Portionenkapsel wird erhöht.
- Die biologische Abbaubarkeit der Portionenkapsel bleibt bei Verwendung einer biologisch abbaubaren Kunststoffkomponente gewährleistet.
   Dies erlaubt es auch, die gesamte, gebrauchte Portionskapsel zu kompostieren. Damit entfällt auch die Trennung von kompostierbaren Teilen, beispielsweise des Extraktionsguts, von nicht kompostierbaren Teilen. Es ist bekannt, dass sich das Extraktionsgut, insbesondere wenn es sich um Kaffee handelt, sehr gut kompostieren lässt und einen positiven Effekt auf den fertigen Kompost, insbesondere in Form eines erhöhten Nährstoffeintrags, hat. Bei Standardkapseln bildet in der Regel das Material der (leeren) Portionenkapsel den nichtkompostierbaren Teil.
- Die Gewinnung der Komponente aus den Silberhäutchen ist sehr einfach. Beispielsweise können die Silberhäutchen bei der Entkoffeinierung und/oder Röstung gewonnen werden. Die Restfeuchtigkeit der Komponente kann dann bei oder unmittelbar nach der Gewinnung reduziert werden. Ferner lassen sich so gewonnenen Silberhäutchen sehr einfach mechanisch zerkleinern.

Eine erfindungsgemässe Portionenkapsel weist ein Basiselement auf, das einen durch eine äussere Wand begrenzten Innenraum bildet und das eine Öffnung zum Einbringen eines Extraktionsgut aufweist. In anderen Worten weist die Portionenkapsel ein Basiselement auf, das eingerichtet ist, ein Extraktionsgut aufzunehmen. Beispielsweise kann das Basiselement becher- oder sackartig ausgebildet sein und eine verschliessbare Öffnung aufweisen, über die das Extraktionsgut in das Basiselement, das heisst in den durch das Basiselement gebildeten Innenraum, einbringbar ist. Beispielsweise kann das Basiselement einen Bodenbereich und eine umlaufende Seitenwand aufweisen.

Bei der erfindungsgemässen Portionenkapsel weist das Basiselement einen Verbundwerkstoff auf, wobei eine Komponente des Verbundwerkstoffs aus Silberhäutchen der Kaffeekirsche hergestellt ist (nachfolgend "Silberhäutchen-Komponente"). Das heisst, dass eine Komponente des Verbundwerkstoffs aus Silberhäutchen der Kaffeekirsche gewonnen wird.

Insbesondere kann das Basiselement im Wesentlichen aus dem Verbundwerkstoff bestehen. Das Basiselement umfasst dann weitere Werkstoffe nur in Form von Schichten (beispielsweise Diffusionssperrschichten, beispielsweise PVOH), Beschriftungen, Codierungen etc. Insbesondere ist der Verbundwerkstoff der Werkstoff, der dem Basiselement die Form und Stabilität gibt.

Bei der Herstellung der Silberhäutchen-Komponente kann auf Zusatzstoffe verzichtet werden. Das heisst, die Komponente kann nur Material der Silberhäutchen selbst umfassen.

Die Herstellung der Silberhäutchen-Komponente kann Verarbeitungsschritte wie Zerkleinerung, Trocknen und/oder Entölung der Silberhäutchen umfassen.

Der Verbundwerkstoff umfasst neben der Silberhäutchen-Komponente eine Kunststoffkomponente. Der Verbundwerkstoff kann weitere Komponenten und/oder Additive, beispielsweise ein Haftvermittler, umfassen.

In der Regel bilden die Silberhäutchen-Komponente und die Kunststoffkomponente den wesentlichen Massenanteil des Verbundwerkstoffs. Das heisst, der Massenanteil der Silberhäutchen-Komponente und der Kunststoffkomponente kann mehr als 90%, insbesondere mehr als 95% oder 98% der Masse des Verbundwerkstoffs ausmachen.

Der Massenanteil der Silberhäutchen-Komponente kann zwischen 10 und 70%, insbesondere zwischen 20 und 60% oder zwischen 25 und 50% sein. Beispielsweise kann der Massenanteil der Silberhäutchen-Komponente um die 30, 35, 40 oder 45% sein. Bei diesen Werten handelt es sich um Richtwerte, die je nach Fettanteil und Restfeuchtigkeit variieren kann. Der Variationsbereich kann näherungsweise mit +/-5% angegeben werden.

Der Massenanteil der Kunststoffkomponente kann den Rest der Masse des Verbundwerkstoffs minus die Masse von Additiven ausmachen. Da die Masse der Additiven in der Regel bei einigen wenigen Prozent, beispielsweise bei oder unter 5%, das heisst beispielsweise bei 4%, 3%, 2% oder 1% oder weniger liegt, kann der Massenanteil der Kunststoffkomponente zwischen etwa 25 und 90%, zwischen 35 und 80% oder zwischen 45 und 75% sein. Beispielsweise kann der Massenanteil der Kunststoffkomponente um die 65-70%, 60-65%, 55-60% oder 50-55% sein. Neben dem Anteil an Additiven ist zusätzlich auch der Variationsreich der Silberhäutchen-Komponente zu beachten.

Zur Herstellung der Silberhäutchen-Komponente können die Silberhäutchen getrocknet werden. Insbesondere können die Silberhäutchen eine Restfeuchtigkeit von unter 5%, insbesondere unter 2%, unter 1%, unter 0,5%, 0.2% oder 0.1% aufweisen. Der Massenanteil der Restfeuchtigkeit in unbearbeitete Silberhäutchen kann variieren und insbesondere von der Kaffeesorte abhängen. Untersuchungen haben ergeben, dass beispielsweise der Masseanteil an Restfeuchtigkeit in den Silberhäutchen der Sorte Arabica bei etwa 7-8% liegt (Borrelli RC, Esposito F, Napolitano A, Ritieni A, Fogliano V (2004) Characterization of a new potential functional ingredient: coffee silverskin. Journal of Agricultural and Food Chemistry 52 (5):1338-1343).

Zur Herstellung der Silberhäutchen-Komponente können die Silberhäutchen entölt werden. Insbesondere können die Silberhäutchen einen Fettanteil von unter 10%, insbesondere unter 8%, 6%, 4%, oder unter 2% aufweisen.

Der Fettanteil in unbearbeitete Silberhäutchen kann variieren und insbesondere von der Kaffeesorte abhängen. Beispielsweise haben Untersuchungen ergeben, dass der Fettanteil in den Silberhäutchen der Sorte Arabica bei verhältnismässig tiefen 2-3% liegt (Borrelli RC, Esposito F, Napolitano A, Ritieni A, Fogliano V (2004) Characterization of a new potential functional ingredient: coffee silverskin. Journal of Agricultural and Food Chemistry 52 (5):1338-1343).

Zur Herstellung der Silberhäutchen-Komponente können die Silberhäutchen zerkleinert werden. Insbesondere kann eine maximale Ausdehnung der zerkleinerten Silberhäutchen kleiner als 1 mm, insbesondere kleiner als 0.75 mm oder 0.5 mm sein. Beispielsweise kann die maximale Ausdehnung zwischen 0.01 und 1 mm, zwischen 0.01 und 0.5 mm oder zwischen 0.01 und 0.3 mm liegen.

Es versteht sich von selbst, dass bei der Zerkleinerung von grossen Mengen an Silberhäutchen nicht jedes einzelne zerkleinerte Silberhäutchen eine maximale Ausdehnung wie oben angegeben haben kann. Vielmehr können die Silberhäutchen als zerkleinert gelten, wenn die Silberhäutchen-Komponente im Wesentlichen, das heisst beispielsweise zu 90%, Silberhäutchen mit der oben angegebenen maximalen Ausdehnung aufweist.

Die Silberhäutchen können insbesondere mechanisch Zerkleinert werden.

Der Verbundwerkstoff kann insbesondere durch Compoundierung hergestellt sein.

In einer Ausführungsform weist die Portionenkapsel einen Kapseldeckel auf, der entlang eines umlaufenden Rands der Öffnung befestigt ist oder befestigbar ist. Das heisst, der Kapseldeckel ist eingerichtet, die Öffnung nach dem Befüllen des Basiselements mit Extraktionsgut zu verschliessen, beziehungsweise die gebrauchsfertige Portionenkapsel weist einen Kapseldeckel auf, so dass sich das Extraktionsgut in einem durch das Basiselement und den Kapseldeckel gebildeten, geschlossenem Innenraum der Portionenkapsel befindet.

In dieser Ausführungsform weisen bevorzugt sowohl das Basiselement als auch der Kapseldeckel den Verbundwerkstoff auf.

Insbesondere können sowohl das Basiselement als auch der Kapseldeckel im Wesentlichen aus dem Verbundwerkstoff bestehen. Das Basiselement und der Kapseldeckel umfassen dann - wenn überhaupt - weitere Werkstoffe nur in Form von Schichten, Beschriftungen, Codierungen etc. Insbesondere ist der Verbundwerkstoff der Werkstoff, der dem Basiselement und dem Kapseldeckel die Form und Stabilität gibt.

Basiselement und Kapseldeckel können sich dennoch in ihren Eigenschaften, insbesondere in ihren mechanischen Eigenschaften, unterscheiden.

Beispielsweise kann der Kapseldeckel flexibel sein, während das Basiselement formsteif (rigid) ist. Alternativ kann sowohl der Kapseldeckel als auch das Basiselement rigid sein.

Der Kapseldeckel kann von einer blossen Folie, beispielsweise einer Siegelfolie, oder einer Platte verschieden sein und als dreidimensionales Objekt ausgebildet sein und bspw. eine Wölbung nach aussen bilden. Der Kapseldeckel kann also einen dreidimensionalen rigiden Körper bilden.

In Ausführungsformen zeichnet sich der Kapseldeckel dadurch aus, dass er radialinnerhalb von einem umlaufenden Deckel-Kragen, der während des Befestigens an der umlaufenden Seitenwand eine Befestigungspartie bildet, eine Wölbung nach aussen bildet, wobei der umlaufende Deckel-Kragen in seiner Dimensionierung auf einen Kragen (Rand, Flansch) der umlaufenden Seitenwand (beziehungsweise des Basiselements) abgestimmt ist. Der Kapseldeckel unterscheidet sich gemäss diesen Ausführungsformen also von einem flachen, bspw. folien- oder plattenartigen Deckelelement. Er ist ein dreidimensional geformter Körper.

Die Form des Kapseldeckels kann in solchen Ausführungsformen von aussen nach innen den Deckel-Kragen, einen gekrümmten Übergangsbereich und einen mittigen flachen Bereich aufweisen, der die eigentliche oberseitige Deckfläche bildet. Ein solcher flacher Bereich ist aufgrund des Übergangsbereichs, der die Wölbung bewirkt, von der Ebene des Deckel-Kragens nach aussen abgesetzt. Der Übergangsbereich kann bspw. S-förmig gekrümmt sein oder stetig von einer in einem Winkel zur Kragenebene stehenden äusseren Partie hin zum mittigen flachen Bereich gekrümmt verlaufen. Dabei ist die Dimensionierung beispielsweise so gewählt, dass der mittige flache Bereich optisch dominiert, indem er bspw. gleich gross wie oder nur unwesentlich (bspw. maximal 10%) kleiner als die Fläche des Bodenbereichs ist. Es kann insbesondere bei einer Ausführung der Portionenkapsel als insgesamt quader- oder würfelförmig vorgesehen sein, dass dieser flache Bereich mehr als 60% des Durchmessers und entsprechend mindestens 40% der Fläche, einnimmt.

Der Deckel-Kragen wird im Allgemeinen eine umlaufende, zur Kapseldeckelseite hin gewandte Fläche bilden, die sich von einer Aussenkante des Kragens bis zu einem Ansatz der Wölbung erstreckt. Es kann in Ausführungsformen vorgesehen sein, dass der Ansatz der Wölbung im Vergleich zu der Partie der Seitenwand, an welche der Kragen der umlaufenden Seitenwand anschliesst, nach innen versetzt ist. Ein solcher Versatz kann bspw. mindestens 0.2 mm betragen.

Der Kapseldeckel kann perforiert sein. In vielen Ausführungsformen ist der Kapseldeckel dicht, und das Basiselement umschliesst zusammen mit dem Kapseldeckel das Extraktionsgut vollständig.

In einer Ausführungsform unterscheiden sich Basiselement und Kapseldeckel nur in ihrer Form voneinander. Das heisst, die verwendeten Materialen, Dicken etc. sind identisch.

Insbesondere können Basiselement und Kapseldeckel formsteif sein.

Eine Portionenkapsel kann - je nach konkreter Realisierung - weitere Elemente aufweisen, die den Verbundwerkstoff umfassen oder aus diesem im Wesentlichen bestehen, beispielsweise ein Sieb, ein Mittel zum Anstechen oder Anreissen der Kapsel, ein Mittel zur Kontrolle der Flüssigkeitsverteilung und/oder des Flüssigkeitsflusses in der Kapsel, und/oder ein Verstärkungselement.

In einer Ausführungsform ist der Verbundwerkstoff biologisch abbaubar.

Dies bedeutend insbesondere, dass die Kunststoffkomponente biologisch abbaubar ist.

Der Verbundwerkstoff beziehungsweise die Kunststoffkomponente können insbesondere gemäss EN 13432 (Stand Ende 2019) und/oder ASTM 6400 (Stand gemäss Ende 2019) biologisch abbaubar sein.

Entsprechend kann die gefüllte oder leere, ungebrauchte oder gebrauchte Portionenkapsel biologisch abbaubar sein. Dies ist insbesondere dann der Fall, wenn der Massenanteil der biologisch abbaubaren Kunststoffkomponente und der Silberhäutchen-Komponente am Verbundwerkstoff sehr hoch, beispielsweise über 95% oder 98% ist, und der Massenanteil des Verbundwerkstoffs an der Portionenkapsel (ohne Extraktionsgut) ebenfalls sehr hoch, beispielsweise über 95% oder 98% ist. Es versteht sich von selbst, dass die biologische Abbaubarkeit der Portionenkapsel noch besser ist, falls die verwendeten Additive, Schichten, Beschriftungen etc. ebenfalls biologisch abbaubar sind oder vom Massenanteil her nahezu vernachlässigbar sind.

Die Portionenkapsel kann vollständig biologisch abbaubar sein.

Die Kunststoffkomponente kann einen Biokunststoff umfassen oder aus einem Biokunststoff bestehen. Polybutylenadipat-terephthalta (PBAT), Polylactid (PLA) Polybutylensuccinat (PBS), Polyhydroxyalkanoat (PHA, beispielsweise Polyhydroxybutyrat (PHB)) oder ein stärkebasierter Kunststoff sind Beispiele geeigneter Biokunststoffe. Eine Kunststoffkomponente die mehrere Biokunststoffe umfasst, beispielsweise mehrere der genannten Biokunststoffe, ist möglich.

In einer Ausführungsform umfasst der Verbundwerkstoff eine Kunststoffstoffkomponente, die Polybutylenadipat-terephthalta (PBAT), Polylactid (PLA), Polyvinylalkohol (PVOH) oder eine Kombination dieser Stoffe, insbesondere Polybutylenadipat-terephthalta (PBAT) und Polylactid (PLA) umfasst.

Insbesondere kann die Kunststoffkomponente im Wesentlichen oder ausschliesslich (bis auf unvermeidbare Verunreinigungen) aus Polybutylenadipat-terephthalta (PBAT), Polylactid (PLA), Polyvinylalkohol (PVOH) oder aus einer Kombination dieser Stoffe, insbesondere Polybutylenadipat-terephthalta (PBAT) und Polylactid (PLA) bestehen. In diesen Fällen handelt es sich bei der Kunststoffkomponente um eine biologisch abbaubaren Kunststoffkomponente wie oben beschrieben.

In einer bevorzugten Ausführungsform besteht die Kunststoffkomponente aus PBAT und PLA.

Bei der Kunststoffkomponente kann es sich insbesondere um Ecoflex® oder Ecovio® (bevorzugt) von BASF oder unter anderem Namen angebotene, vergleichbare Kunststoffe handeln.

Falls es sich bei der Kunststoffkomponente um PVOH handelt, kann der Verbundwerkstoff aus PVOH, der Silberhäutchen-Komponente und allenfalls weiteren Additiven bestehen, wobei die Silberhäutchen-Komponente einen Massenanteil von 10 bis 50%, beispielsweise von 20 bis 50% oder von 30 bis 50% am Verbundwerkstoff ausmachen kann.

In einer Ausführungsform ist das Basiselement becherartig und es weist eine rechteckige, insbesondere quadratische, Grundform auf.

In anderen Worten weist das Basiselement eine Becherachse auf, entlang welcher sich die Öffnung erstreckt. Das Basiselement weist dann in einem Schnitt senkrecht zur Becherachse eine rechteckige, insbesondere quadratische Grundform auf.

Das Basiselement kann die Form eines Quaders, insbesondere eines Würfels, aufweisen, wobei eine Seite des Quaders beziehungsweise Würfels offen ist.

Der Kapseldeckel kann eine Form aufweisen, die diese Öffnung des Quaders oder Würfels verschliesst. Das heisst, der Kapseldeckel kann im Wesentlichen (z.B. bis auf Elemente, die zur Befestigung und/oder Funktionalität des Kapseldeckels nötig sind) die Form einer Seite des durch das Basiselement geformten Quaders oder Würfels haben.

Es hat sich herausgestellt, dass eine Portionenkapsel, die (abgesehen vom Extraktionsgut) im Wesentlichen aus dem Verbundwerkstoff besteht und eine rechteckige, insbesondere quadratische, beziehungsweise quaderförmige, insbesondere würfelförmige, Grundform aufweist, sich besonders gut für bestehende, auf Portionenkapseln dieser Form ausgerichtete Systeme zum Zubereiten von Getränken eignet.

Gemäss einem Aspekt der Erfindung wird ferner ein Verfahren zur Herstellung einer Portionenkapsel, die ein Basiselement aufweist, zur Verfügung gestellt.

Das Basiselement kann jede der zuvor beschriebenen Eigenschaften, insbesondere Eigenschaften bezüglich Zusammensetzung, Form und biologischer Abbaubarkeit, aufweisen.

Ein erfindungsgemässes Verfahren umfasst die Schritte:
- Zur Verfügung stellen eines Verbundwerkstoffs; und
- Umformung des Verbundwerkstoffs zum Basiselements; wobei
eine Komponente des Verbundwerkstoffs aus Silberhäutchen der Kaffeekirsche hergestellt ist ("Silberhäutchen-Komponente").

Die Umformung kann insbesondere Spritzguss oder Thermoformen umfassen. Andere Umformverfahren sind denkbar, beispielsweise Extrusion.

Das zur Verfügung stellen des Verbundwerkstoffs kann das zur Verfügung stellen der Silberhäutchen-Komponente, einer Kunststoffkomponente und mindestens eines Additivs umfassen.

Silberhäutchen-Komponente, Kunststoffkomponente und Additiv können in den zuvor angegebenen Massenanteilen zur Verfügung gestellt werden.

Bei der Kunststoffkomponente kann es sich um eine der zuvor beschriebenen Kunststoffkomponenten handeln.

Beim Additiv kann es sich um eine der zuvor beschriebenen Additive, insbesondere um einen Haftvermittler, handeln.

Das zur Verfügung stellen des Verbundwerkstoffs kann Compoundierung umfassen.

Das zur Verfügung stellen des Verbundwerkstoffs kann mindestens einen der bereits beschriebenen Schritte Zerkleinerung der Silberhäutchen, Trocknen der Silberhäutchen und Entölung der Silberhäutchen umfassen.

In einer Ausführungsform werden die zur Herstellung der Silberhäutchen-Komponente nötigen Silberhäutchen während der Röstung der Kaffeebohnen von den Kaffeebohnen separiert, wobei die Silberhäutchen einer Verarbeitungslinie zur Herstellung des Basiselements und allenfalls des Kapseldeckels zugeführt werden und wobei die gerösteten Kaffeebohnen einer Verarbeitungslinie zur Erzeugung des Extraktionsguts zugeführt werden. Alternativ oder ergänzend können die Silberhäutchen während der Entkoffeinierung separiert werden.

Insbesondere können die gerösteten Kaffeebohnen einer Verarbeitungslinie zur Befüllung des Basiselements zugeführt werden.

Die genannten Verarbeitungslinien können sich vollständig am Standort der Röstung (und allenfalls Entkoffeinierung) befinden. Das heisst, die Verarbeitungslinien beginnen unmittelbar nach der Röstung (und/oder Entkoffeinierung) und enden im Einfüllen der verarbeiteten, gerösteten Kaffeebohnen in das erzeugte Basiselement am Standort der Röstung. An demselben Standort kann anschliessend noch das Verschliessen der Portionenkapsel mit dem Kapseldeckel stattfinden.

Die Zuführung der separierten Silberhäutchen und der gerösteten Kaffeebohnen zu den entsprechenden Verarbeitungslinien kann automatisiert erfolgen.

In Ausführungsformen, bei denen ein Kapseldeckel zur Verfügung gestellt wird, kann insbesondere ein Kapseldeckel wie zuvor im Detail beschrieben zur Verfügung gestellt werden.

Das Verfahren zur Herstellung einer Portionenkapsel kann das Bereitstellen des Extraktionsguts umfassen.

Das Verfahren zur Herstellung einer Portionenkapsel kann das Einfüllen des Extraktionsguts in das Basiselement und das Verschliessen des Basiselements mit dem Kapseldeckel umfassen.

Ein Aspekt der Erfindung betrifft einen Verbundwerkstoff.

Beim Verbundwerkstoff handelt es sich insbesondere um einen Verbundwerkstoff für Portionenkapseln. Dies impliziert gewisse Anforderungen bezüglich Lebensmitteltauglichkeit, Versiegelungseigenschaften, Wärmebeständigkeit, Verhalten unter Druck, Bearbeitungsmöglichkeiten etc.

Der erfindungsgemässe Verbundwerkstoff weist eine erste Komponente und eine zweite Komponente auf, wobei die erste Komponente ein Kunststoff ("Kunststoffkomponente") ist und wobei die zweite Komponente aus Silberhäutchen der Kaffeekirsche ("Silberhäutchen-Komponente") hergestellt ist.

Der Verbundwerkstoff weist in der Regel mindestens ein zur Silberhäutchen-Komponente und zur Kunststoffkomponente zusätzliches Additiv auf.

Silberhäutchen-Komponente, Kunststoffkomponente und Additiv können in den zuvor angegebenen Massenanteilen im Verbundwerkstoff enthalten sein.

Bei der Kunststoffkomponente kann es sich um eine der zuvor beschriebenen Kunststoffkomponenten handeln.

Insbesondere kann es sich bei der ersten Komponente, das heisst bei der Kunststoffkomponente, um eine biologisch abbaubare Komponente handeln, insbesondere eine gemäss EN 13432 (Stand Ende 2019) und/oder ASTM 6400 (Stand Ende 2019) biologisch abbaubare Kunststoffkomponente.

In einer Ausführungsform umfasst die erste Komponente, das heisst die Kunststoffkomponente, Polybutylenadipat-terephthalta (PBAT), Polylactid (PLA), Polyvinylalkohol (PVOH) oder eine Kombination dieser Stoffe, insbesondere Polybutylenadipat-terephthalta (PBAT) und Polylactid (PLA).

Die erste Komponente (die Kunststoffkomponente) kann PBAT, PLA und/oder PVOH wie zuvor beschrieben umfassen.

Insbesondere kann die erste Komponente (die Kunststoffkomponente) bis auf Verunreinigungen aus PBAT und PLA bestehen.

Insbesondere kann es sich bei der ersten Komponente (der Kunststoffkomponente) um Ecoflex® oder Ecovio® (bevorzugt) von BASF oder einen unter anderem Namen angebotenen, vergleichbaren Kunststoff handeln.

Beim Additiv kann es sich um einen der zuvor beschriebenen Additive in einem wie zuvor beschrieben Massenanteil handeln.

Der Verbundwerkstoff kann ein compoundierter Verbundwerkstoff sein. Das heisst, die Herstellung des Verbundwerkstoff kann Compoundierung umfassen und der Verbundwerkstoff kann sich daraus ergebende Eigenschaften, insbesondere mit Blick auf seine Struktur, aufweisen.

Die Silberhäutchen-Komponente kann im Verbundwerkstoff in einer Art und Weise vorliegen, die sich aus einem oder mehreren der bereits beschriebenen Schritte "Zerkleinerung der Silberhäutchen", "Trocknen der Silberhäutchen" und "Entölung der Silberhäutchen" ergibt.

Ein Aspekt der Erfindung betrifft die Verwendung des erfindungsgemässen Verbundwerkstoffes in irgendeiner der offenbarten Ausführungsformen zur Herstellung des Basiselements und optional des Kapseldeckels.

Die Erfindung betrifft auch die Verwendung des erfindungsgemässen Verbundwerkstoffes in irgendeiner der offenbarten Ausführungsformen zur Herstellung einer Portionenkapsel.

Ein Aspekt der Erfindung betrifft ein Verfahren zur Herstellung des erfindungsgemässen Verbundwerkstoffes in einer der zuvor beschriebenen Ausführungsformen. Das heisst, ein Aspekt der Erfindung betrifft ein Verfahren zur Herstellung eines Verbundwerkstoffes, insbesondere eines Verbundwerkstoffes für Portionenkapseln.

Das Verfahren zur Herstellung des Verbundwerkstoffes umfasst die Schritte:
- Zur Verfügung stellen der ersten Komponente.
   Das heisst, eine Kunststoffkomponente wie zuvor beschrieben wird zur Verfügung gestellt. Insbesondere wird die Kunststoffkomponente in einer Menge zur Verfügung gestellt, dass ein zuvor angegebener Mengenanteil am Verbundwerkstoff resultiert.
   Die Kunststoffkomponente kann eine der zuvor genannten Kunststoffkomponenten sein.
- Zur Verfügung stellen der zweiten Komponente.
   Das heisst, eine Silberhäutchen-Komponente wie zuvor beschrieben wird zur Verfügung gestellt. Insbesondere wird die Silberhäutchen-Komponente in einer Menge zur Verfügung gestellt, dass ein zuvor angegebener Mengenanteil am Verbundwerkstoff resultiert.
   Die Silberhäutchen-Komponente kann ferner in Bezug auf maximale Ausdehnung der enthaltenen Silberhäutchenreste, auf Feuchtigkeitsgehalt und/oder Fettanteil wie zuvor angegeben zur Verfügung gestellt werden. Das Herstellungsverfahren kann einen entsprechenden Zerkleinerungs-Schritt, einen entsprechenden Trocknungs-Schritt und/oder einen entsprechenden Entölungs-Schritt umfassen.
- Compoundieren der ersten und zweiten Komponente.

In einer Ausführungsform weist das Verfahren zur Herstellung des Verbundwerkstoffs einen Schritt auf, in welchem die Silberhäutchen und die Kaffeebohnen separiert werden. Die Separierung findet insbesondere während der Röstung statt. In diesem Fall kann der Röstprozess so eingerichtet sein, dass ein an die Gewinnung der Silberhäutchen anschliessender, separater Trocknungs-Schritt nicht mehr nötig ist.

Alterativ oder ergänzend kann die Separierung während der Entkoffeinierung stattfinden.

Ergänzend kann das Verfahren zur Herstellung des Verbundwerkstoffes den Zerkleinerungs-Schritt aufweisen.

Ferner kann das Verfahren zur Herstellung des Verbundwerkstoffes den Entölungs-Schritt aufweisen.

Nachfolgend werden Ausführungsbeispiele der Erfindung anhand von Figuren beschrieben. Es zeigen:
- Fig. 1 eine Portionenkapsel;
- Fig. 2 ein Basiselement einer Portionenkapsel gemäss Figur 1;
- Fig. 3 ein Kapseldeckel einer Portionenkapsel gemäss Figur 1, der auf ein Basiselement gemäss Figur 2 abgestimmt ist;
- Fig. 4 ein Verfahren zur Herstellung einer konsumbereiten Kaffee-Portionenkapsel.

In den Figuren bezeichnen gleiche Bezugszeichen gleiche oder analoge Elemente.

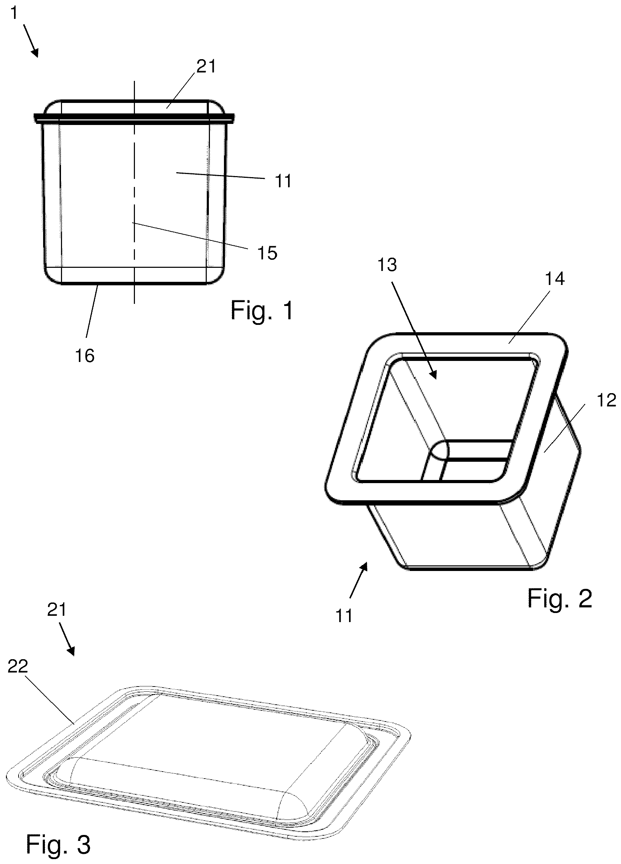

Die beispielhafte Portionenkapsel 1 gemäss **Figur 1** weist ein Basiselement 11 in Form eines Bechers (mit Becherachse 15) und einen daran entlang eines umlaufenden Flansches 14 befestigten Kapseldeckel 21 auf, die zusammen eine äussere Kapselwand bilden und einen Kapselinnenraum definieren. Das Basiselement 11 bildet wie an sich bekannt einen hier leicht gewölbten Kapselboden 16 und eine umlaufende Seitenwand 12.

Basiselement 11 und Kapseldeckel 21 sind aus einem Verbundwerkstoff gefertigt, der aus einer Komponente, die aus Silberhäutchen der Kaffeekirsche gewonnen wurde, und aus einer Kunststoffkomponente unter Beimischung eines Haftvermittlers compoundiert wurde. Bei der Kunststoffkomponente handelt es sich um Ecovio® von BASF. Der Haftvermittler ist Licocene PP MA 7452.

Die Befestigung des Kapseldeckels 21 am Basiselement 11 ist auf bekannte Art vorgenommen worden, bspw. durch Ultraschallschweissen oder eventuell durch Kleben.

**Figur 2** zeigt eine Detailansicht des Basiselements 11. Das Basiselement 11 ist becherartig mit einer quadratischen Grundform ausgebildet. Das heisst, das Basiselement hat im Wesentlichen die Form eines Würfels, wobei eine der sechs Seiten des Würfels fehlt und eine Öffnung 13 bildet. Über diese Öffnung kann Extraktionsgut in den Innenraum des Basiselements und somit in den Kapselinnenraum eingebracht werden.

In der gezeigten Ausführungsform sorgen der umlaufende Rand 14, an dem der Kapseldeckel 21 befestigbar ist, abgerundete Kanten und allenfalls leicht gewölbte Seiten zu einer Abweichung von der Form eines Würfels.

**Figur 3** zeigt eine Detailansicht des Kapseldeckels 21. In der gezeigten Ausführungsform besteht dieser aus demselben Verbundwerkstoff mit derselben Dicke wie das Basiselement 11.

Der Kapseldeckel 21 weist einen umlaufenden Kragen 22 auf, der auf den Rand 14 des Basiselements 11 abgestimmt ist, so dass der Kapseldeckel 21 das Basiselement 11 bei entsprechender Befestigung fluiddicht abschliessen kann.

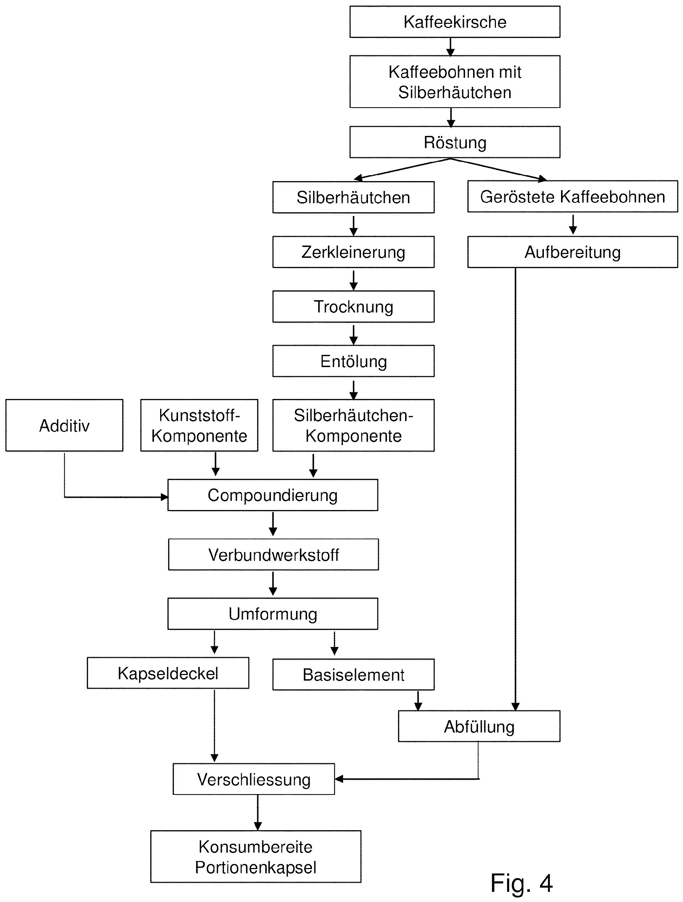

**Figur 4** zeigt schematisch ein Verfahren zur Herstellung einer konsumbereiten Portionenkapsel. Im Schema sind neben der erfindungsgemässen Verwendung der Silberhäutchen diverse optionale Merkmale gezeigt.

Das gezeigte Verfahren beginnt mit der zur Verfügungstellung von Kaffeekirschen. Aus diesen werden Kaffeebohnen (Samen der Kaffeekirschen) gewonnen. Nach der Gewinnung der Kaffeebohnen umschliesst das Silberhäutchen noch die Kaffeebohnen.

In einem nächsten Schritt werden die Kaffeebohnen geröstet. Da sich die Kaffeebohnen zu Beginn des Röstprozesses ausdehnen, werden die Silberhäutchen von den Kaffeebohnen weggesprengt.

Die Silberhäutchen werden in einem nächsten Schritt von den Kaffeebohnen getrennt und anschliessend zerkleinert, getrocknet (je nach Röstprozess nicht nötig) und allenfalls entölt. Das heisst, es wird ein aus den Silberhäutchen gewonnener Stoff erzeugt, der als Komponente in einem Compoundierungsverfahren und als Komponente eines Verbundwerkstoffs geeignet ist.

Diese "Silberhäutchen-Komponente" wird mit einer Kunststoffkomponente, vorzugsweise einer biologisch abbaubaren Kunststoffkomponente wie Ecovio® und weiteren Additiven zur Verbesserung der Eigenschaften des resultierenden Verbundwerkstoffs gemischt (compondiert).

Der resultierende Verbundwerkstoff wird anschliessend verwendet, um das Basiselement 11 und optional den Kapseldeckel 21 und/oder andere Elemente der Portionenkapsel zu formen. Der resultierende Verbundwerkstoff eignet sich insbesondere zum Einsatz in einem Spritzgussverfahren oder für Thermoformen.

Die Kaffeebohnen, von denen die Silberhäutchen separiert wurden und die geröstet wurden, werden ebenfalls weiterverarbeitet so dass das Extraktionsgut entsteht.

Insbesondere werden die Kaffeebohnen gemahlen und allenfalls entkoffeiniert.

In einem weiteren Schritt wird das so gewonnene Extraktionsgut in das so hergestellte Basiselement abgefüllt.

Letztlich wird das mit dem Extraktionsgut gefüllte Basiselement 11 mit dem während des Verfahrens hergestellten oder einem zur Verfügung gestellten Kapseldeckel 21, beispielsweise mittels Ultraschallschweissen, verschlossen.

Nach dem Verschliessen steht die konsumbereite Portionenkapsel 1 zur Verfügung.

Weitere Schritte oder zwischengeschaltete Schritte, insbesondere das Anbringen von Sperrschichten, insbesondere Diffusionssperrschichten, Reinigungsschritte, das Anbringen von Kennzeichnungen etc. sind denkbar.

## Patentansprüche

1. Portionenkapsel (1) aufweisend ein Basiselement (11), das einen durch eine äussere Wand (12) begrenzten Innenraum bildet, wobei das Basiselement eine Öffnung (13) aufweist und wobei das Basiselement einen Verbundwerkstoff umfasst, **dadurch gekennzeichnet, dass** eine Komponente des Verbundwerkstoffs aus Silberhäutchen der Kaffeekirsche hergestellt ist.

2. Portionenkapsel (1) nach Anspruch 1, ferner aufweisend einen Kapseldeckel (21), wobei der Kapseldeckel entlang eines umlaufenden Rands (14) der Öffnung (13) befestigt ist oder befestigbar ist und wobei das Basiselement (11) und der Kapseldeckel (21) den Verbundwerkstoff umfassen.

3. Portionenkapsel (1) nach einem der Ansprüche 1-2, wobei der Verbundwerkstoff biologisch abbaubar ist.

4. Portionenkapsel (1) nach einem der Ansprüche 1-3, wobei der Verbundwerkstoff eine Kunststoffstoffkomponente aufweist, die Polybutylenadipat-terephthalta (PBAT), Polylactid (PLA), Polyvinylalkohol (PVOH) oder Polybutylenadipat-terephthalta (PBAT) und Polylactid (PLA) umfasst.

5. Portionenkapsel (1) nach einem der Ansprüche 1-4, wobei das Basiselement (11) becherartig ist und eine rechteckige, insbesondere quadratische, Grundform aufweist.

6. Verfahren zur Herstellung einer Portionenkapsel (1), wobei die Portionenkapsel ein Basiselement (11) aufweist und das Verfahren folgende Schritte umfasst:
• Zur Verfügung stellen eines Verbundwerkstoffs
• Umformung des Verbundwerkstoffs zum Basiselement (11)
**dadurch gekennzeichnet, dass** eine Komponente des Verbundwerkstoffs aus Silberhäutchen der Kaffeekirsche hergestellt ist.

7. Verfahren nach Anspruch 6, wobei die Silberhäutchen während einer Röstung der Kaffeebohnen von den Kaffeebohnen separiert werden, wobei die Silberhäutchen einer Verarbeitungslinie zur Herstellung eines Basiselements (11) zugeführt werden und wobei die gerösteten Kaffeebohnen einer Verarbeitungslinie zur Herstellung eines Extraktionsguts zugeführt werden.

8. Verbundwerkstoff für Portionenkapseln (11), wobei eine erste Komponente des Verbundwerkstoffs ein Kunststoff ist, **dadurch gekennzeichnet, dass** eine zweite Komponente des Verbundwerkstoffs aus Silberhäutchen der Kaffeekirsche hergestellt ist.

9. Verbundwerkstoff nach Anspruch 8, wobei der Verbundwerkstoff biologisch abbaubar ist.

10. Verbundwerkstoff nach einem der Ansprüche 8-9, wobei die erste Komponente Polybutylenadipat-terephthalta (PBAT), Polylactid (PLA), Polyvinylalkohol (PVOH) oder Polybutylenadipat-terephthalta (PBAT) und Polylactid (PLA) umfasst.

11. Verfahren zur Herstellung eines Verbundwerkstoffs für Portionenkapseln (11) nach einem der Ansprüche 8-10, **dadurch gekennzeichnet, dass** die erste Komponente und die zweite Komponente compoundiert werden.

12. Verfahren nach Anspruch 11, umfassend die Schritte
• Separierung von Silberhäutchen und Kaffeebohnen
• Zerkleinerung der Silberhäutchen.
